# EUROPEAN PATENT APPLICATION

(11) **EP 4 099 064 A1**
(43) Date of publication of application: **07.12.2022**
(21) Application number: 22176605.8
(22) Date of filing: 01.06.2022
(51) Int. Cl.: G01V 3/10, G06K 7/10, G08G 1/14, H04L 9/32, H04W 52/02

(54) **BATTERY-POWERED VEHICLE-DETECTION DEVICE USING AN EMBEDDED INDUCTIVE SENSOR**

(30) Priority: 02.06.2021 US 202163196085 P; 24.05.2022 US 202217752406
(71) Applicant: Nwave Technologies, Inc., Sacramento, CA 95811 (US)
(72) Inventor: Birchenko, Yury, London (GB)
(74) Representative: Ingenias Creaciones Signos e Invenciones S.L.

(57) **Abstract**

Various embodiments set forth a device comprising one or more batteries configured to generate a first power, and an inductive sensor configured to generate a magnetic field based on the first power, and to generate, based on a change to the magnetic field, a sensing signal indicating a presence of an object, where delivery of the first power to the inductive sensor is based on one or more additional signals and/or based on a timing signal.

## Description

### FIELD OF THE INVENTION

Embodiments disclosed herein generally relate to the vehicle sensors, and more specifically, a battery-powered vehicle-detection device using an embedded inductive sensor.

### BACKGROUND

A battery-powered vehicle-detection device that detects the presence of a motor vehicle is typically relatively small, easy to carry, and easy to install. These devices are oftentimes used to monitor parking spaces and count vehicles within an area. The battery-powered vehicle- detection device communicates with a parking or traffic management system using a wireless protocol. The battery-powered vehicle-detection device typically receives its power from one or more small, long-lasting batteries.

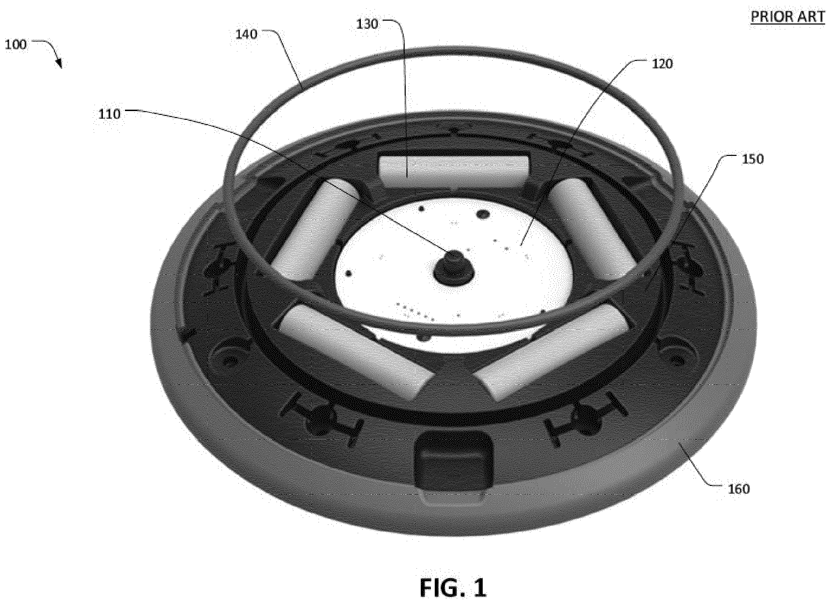

FIG. 1 depicts a prior-art battery-powered wireless vehicle-detection device 100, as described in US Patent Publication No. 2019/0311622 ("Low-profile Surface-mounted Wireless Parking Sensor" by Birchenko). The vehicle-detection device body 150 houses and supports a circular-shaped PCB 120 and one or more batteries 130. The vehicle-detection device base 160 supports the vehicle-detection device body 150. A central, vertical pillar 110 connects to the vehicle-detection device base 160 and is capable of supporting the weight of a motor vehicle. The rubber O-ring 140 provides a hermetic seal to prevent moisture from entering the device. The circular PCB 120 includes electronics for motor vehicle sensing and wireless communication (e.g., Bluetooth, LoRaWAN, etc.) The batteries 130 are disposed around the outside of the circular PCB 120 at approximately the same vertical elevation to minimize the height of the vehicle-detection device 100.

US Patent Publication No. 2020/0053563 ("System and Method for Fast, Secure and Power Efficient Occupancy Session Management" by Birchenko) describes electronic devices for motor vehicle sensing. The vehicle-detection capabilities include a magnetometer to detect ferrous metals, an IR sensor to detect reflected LED pulses, an active ultrasonic sensor based on time-of-flight principle, a vibration sensor, and other sensors.

As the automotive industry transitions from gasoline-powered vehicles to electric vehicles, the vehicles contain less ferrous metals. Consequently, the magnetometer becomes less accurate as a vehicle sensor, as the magnetometer may not detect the small quantity of ferrous metals in the vehicle. Further, pollution, snow, ice, and/or water can change the reflective properties of the vehicle bottom and road surface. Such conditions can therefore interfere with the operation of devices that use sensors that detect light or electromagnetic waves.

In light of the above, more effective sensing techniques would be useful.

### SUMMARY

A first aspect of the invention relates to a device for detecting an object (i.e. a presence of an object), such as a vehicle (e.g. cars, sports-utility vehicles, vans trucks, buses, electric vehicles, etc.). The device comprises at least one battery configured to generate a first power, and at least one inductive sensor (i.e. at least a first inductive sensor) configured to generate a magnetic field based on the first power, and also configured to generate, based on a change to the magnetic field, a sensing signal indicating a presence of an object, where delivery of the first power to the inductive sensor is based on one or more additional signals and/or a timing signal. Preferably, the inductive sensors comprises a loop coil that include at least one turn. An inductive sensor is also referred to as a high-power sensor or a high-power inductive sensor. Thus, the delivery of the first power to the at least one inductive sensor is conducted in response to the one or more additional signals and/or in response to a timing signal. In the context of the device of present disclosure, the term battery may interpreted as referring to a single battery, but also to a group of interconnected batteries, i.e. to one or more batteries.

In some embodiments, the device may also comprise at least one passive sensor (also referred to as a low-power sensor) configured to generate the one or more additional signals (also referred to as early detection signals) in response to an initial/early detection of the object. Thus, the device may be configured to turn on the at least one inductive sensor (i.e. to deliver the first power from the battery to the at least one inductive sensor, e.g. to a first inductive sensor) in response to an initial/early detection of an object carried out by the at least one passive sensor. The at least one passive sensor may be configured to generate the one or more additional signals as a result of a positive determination of the presence of the object at a position next to the at least one passive sensor.

In some embodiments of the invention, the device may further comprise (in addition to the at least one passive sensor or as an alternative to the at least one passive sensor) a timer (e.g. a clock timer) configured to measure time periods, in particular, to measure at least a first time period. The timer may also be configured to provide at least one timing signal indicating when a determined time period (e.g. a first time period) ends. Thus, the device may be configured to turn on the at least one inductive sensor (i.e. to deliver the first power from the battery to the at least one inductive sensor, e.g. to a first inductive sensor) in response to the timing signal provided by the timer and indicating the end of a predetermined time period (e.g. a first time period).

In some embodiments compatible with the invention, the device may simultaneously comprise at least one passive sensor and a timer configured to measure at least one time period. Thus, the device may be configured to deliver the first power to the first inductive sensor based on the one or more additional signals and/or based on the timing signal indicating the end of a predetermined time period.

In some advantageous embodiments, the device may be configured to activate/turn on the at least one passive sensor in response to a first power timing signal (provided by a timer; wherein the first power timing signal is also referred to as passive or low-power timing signal), and to turn on the one or more inductive sensors (i.e. to deliver the first power from the one or more batteries to the at least one inductive sensor) in response to the one or more additional signals provided by the one or more passive sensors, wherein said one or more additional signals are provided by the at least one passive sensor when an initial detection of an object has been achieved by the one or more passive sensors. Optionally, the device may be configured to turn on the one or more inductive sensors in response to the one or more additional signals and/or in response to a second timing signal (provided by the same timer generating the first timing signal or by a different timer; wherein the second first power timing signal is also referred to as inductive or high-power timing signal). For example, the second timing signal may correspond to a second time period (also referred to as inductive/high-power time period) being longer than the first time period (also referred to as passive/low-power time period) related to the first timing signal. Thus, one or more of the inductive sensors may be configured to be activated even when no additional signal is received from the at least one passive sensor (independently of whether the at least one passive sensor are always activated or are activated in response to a timing signal, e.g. a first timing signal), allowing the detection device to continue operating even when the at least one passive sensors fails or is damaged. Additionally or alternatively, a first inductive sensor may be configured to be activated in response to the one or more additional signals, while a second inductive sensor may be configured to be activated in response to a timing signal (e.g. a first or a second timing signal). In some embodiments, each inductive sensor may be configured to be activated in response to an independent timing signal (e.g. provided by a common timer or by an independent timer).

All the configurations described in the previous paragraph are compatible with other technical features of the detection device disclosed in the description and the claims, such as the oscillator, the A/D converter, the presence of a second induction sensor in a detection device, the presence of a plurality of passive sensors (e.g. a magnetometer and/or an ambient light sensor), the object detection system and the method for detecting a vehicle.

At least one technological advantage of the battery-powered vehicle-detection device with at least one induction sensor relative to the prior art is that, with the disclosed apparatus, a device can periodically power an induction sensor to sense nearby objects based on an initial detection from one or more passive sensors configured to provide one or more additional signals based on the initial detection, thereby lowering the amount of energy required by the device. Further, as the battery-powered vehicle-detection device with at least one induction sensor detects objects based on changes in a magnetic field, the device can detect a wider range of vehicles that contain fewer quantities of ferrous materials or have higher road clearance. These technical advantages provide one or more technological advancements over prior art approaches.

At least one technological advantage of the battery-powered vehicle-detection device with induction sensor relative to the prior art is that, with the disclosed apparatus, a device can periodically power an induction sensor to sense nearby objects based on an initial detection from one or more passive sensors configured to provide one or more additional signals based on the initial detection, thereby lowering the amount of energy used that the apparatus uses.

Furthermore, in those embodiments in which the detection device comprises a timer, use of the timer may also contribute to reduce the amount of energy used by the apparatus, since the device may also periodically power at least one of the induction sensors and/or at least one of the passive sensors based on the timing signals provided by the timer. Accordingly, the use of one or more timers provides for activation of passive or active sensors (e.g. inductive sensors) using a duty-cycle, as a means to reduce overall power in the detection device. Further, as the battery-powered vehicle-detection device with induction sensor detects objects based on changes in a magnetic field, the device can detect a wider range of vehicles that contain fewer quantities of ferrous materials or have higher road clearance. These technical advantages provide one or more technological advancements over prior art approaches.

The device (i.e. the detection device, also referred to as the battery-power vehicle-detection device) according to the invention may also comprise a microprocessor configured to generate a determination signal based on the sensing signal generated by the first inductive sensor. The microprocessor may further be configured to cause the determination signal to be transmitted (preferably, wirelessly transmitted) to at least one remote device or system, being external to the detection device.

It is noted that the present disclosure describes several tasks to be carried out by microprocessor(s). However, considering the capabilities of the state of the art microprocessors, all these tasks may be conducted by a single microprocessor (even when they are described as being performed by an separate/independent microprocessor) or by a separate/independent microprocessor.

A remote device/subsystem may be configured as a portable device (e.g. a smartphone or an embedded computer), as a communication device (e.g. wireless communication device of the vehicle), a remote server (the remote server being preferably connected to a network comprising several interconnected detection devices), a vehicle counting system, or an automatic gate control system (i.e. a system configured to open/close a gate/door to allow passage of a detected vehicle). Thus, the detection device may be connected to a network comprising more than one remote devices/subsystems. For example, a detection device may be connected to a network comprising a remote management server connected to a plurality of other detection devices according to the invention, wherein the management server may be configured to monitor and/or coordinate the operation of the different detection devices. In addition or complementarily, a detection device according to the invention may be connected to

In preferred embodiments, the detection device may also comprise a printed circuit board. The microprocessor may be arranged/mounted in the printed circuit board. The at least one battery may be disposed within one or more cut-out areas included in the printed circuit.

In some embodiments, the microprocessor may be configured to receive the one or more additional signals from the at least one passive sensor and/or to receive the timing signal from the timer. Further, the microprocessor may also be configured to control, based on the one or more additional signals and/or based on the timing signal, the delivery of the first power to the first inductive sensor.

According to preferred embodiments of the invention, the microprocessor may be configured to control the delivery of the first power to the first inductive sensor by analyzing the one or more additional signals to determine an estimated probability that a vehicle is proximate to at least one of the one or more passive sensors. For this purpose, the microprocessor may be configured to detect if the one or more additional signals adopt values that are above a predetermined threshold. The microprocessor may be instructed to identify a plurality of thresholds of the one or more additional signals, each of which may correspond to a predetermined probability related to the presence of an object or vehicle. The microprocessor may make a decision about detection of a vehicle based on a weighted average of the one or more additional signals. In response to the analysis of the one or more additional signals, the microprocessor may cause the one or more batteries to provide the first power to the corresponding inductive sensor (e.g. to the first inductive sensor).

The at least one passive sensor may comprise at least one of: a light sensor configured to measure ambient light, and/or a magnetometer configured to measure a quantity of ferrous materials, and/or a temperature sensor.

According to some embodiments of the invention, the detection device may comprise an oscillator and an analog-to-digital converter (A/D converter). The oscillator and the A/D converter may be integrated into an inductance management and digital converter unit (IMDCU). The analog-to-digital converter may be configured to convert the first power into a first alternating current (AC) power by means of the oscillator. Further, the A/D converter may also be configured to provide the first AC power to the loop coil of the first inductive sensor, to receive the sensing signal from the first inductive sensor (preferably from the loop coil of the first inductive sensor), and to convert the sensing signal into a digital form.

In some embodiments, the A/D converter or the IMDCU may be configured to measure one or more inductive currents produced by the one or more inductive sensors. In some embodiments, the microprocessor may use the inductance measurement as the sensing signal. Alternatively, in some embodiments, the microprocessor may use the inductance measurements of the inductance sensors as an input when generating the sensing signal and/or the detection signal. In a preferred embodiment, the microprocessor may compare the inductance measurements to one or more thresholds, and may then generate a sensing signal based on a determination of whether an inductance measurement of any of the one or more inductance sensors exceeds an associated threshold. In some further embodiments, the microprocessor may generate the detection signal as a binary signal based on a sensing signal that includes the inductance measurement of any of the one or more inductance sensors.

The detection device may further comprise an enclosure including the loop coil of the first inductive sensor, wherein the loop coil may be located proximate to an outer perimeter of the enclosure, and/or may have a diameter of at least 4 cm.

According to some embodiments of the invention, the device may comprise more than one inductive sensor; in particular, the device may comprise a second inductive sensor. Thus, the first inductive sensor may include a first loop coil having a first loop size and one or more turns, and the second inductive sensor may comprise a second loop coil having a second loop size and one or more turns. Preferably, the first inductive sensor is configured to detect the presence of an object (e.g. a vehicle) within a first sensing range based on the first loop size, while the second inductive sensor is configured to detect the presence of an object (e.g. a vehicle) within a second sensing range based on the second loop size. In preferred embodiments, the first sensing range may be of at least 12 cm.

A second aspect of the invention relates to an object detection system for detecting a vehicle, wherein the system comprises one or more detecting devices according to any of the embodiments described throughout the whole application, and at least one remote (i.e. external to the one or more detecting devices) device/subsystem. The at least one remote device/subsystem may be configured as a portable device (e.g. a smartphone or an embedded computer), or as a communication device (e.g. wireless communication device of the vehicle), or as a remote server (the remote server being preferably configured as a management remote server connected to a network comprising a plurality interconnected detection devices, and being preferably configured to monitor and/or coordinate the operation said plurality of detection devices), or as a vehicle counting system, or as an automatic gate control system (i.e. a system configured to open/close a gate/door to allow passage of a detected vehicle), or as a security system, or as a transportation safety system (e.g. a locomotive safety system).

In a preferred embodiment, the system for detecting a vehicle may comprise one or more detection devices connected to a network comprising a remote management server, and, more preferably, the system may additionally comprise a vehicle counting device and/or an automatic gate control system.

A third aspect of the present invention relates to a method for detecting an object by means of a detecting device or a system according to the invention, wherein the method comprises the steps of: receiving, by an inductive sensor, a first power generated by a battery, where the first power is provided to the inductive sensor based on one or more additional signals and/or based on a timing signal provided by a timer; generating, by the inductive sensor and based on the first power, a magnetic field; generating, based on a change to the magnetic field, a sensing signal indicating a presence of an object.

### BRIEF DESCRIPTION OF THE DRAWINGS:

So that the manner in which the above-recited features of the various embodiments can be understood in detail, a more-particular description of the inventive concepts, briefly summarized above, can be had by reference to the various embodiments, some of which are illustrated in the appended drawings. The accompanying drawings, which are incorporated in and form a part of this specification and in which like numerals depict like elements, illustrate embodiments of the present disclosure and, together with the description, serve to explain the principles of the disclosure. It is to be noted, however, that the accompanying drawings illustrate only typical embodiments of the inventive concepts and are therefore not to be considered limiting in scope in any way, and that there are other equally-effective embodiments.
Figure 1 depicts an example prior-art battery-powered, wireless vehicle-detection device.
Figure 2 illustrates an example object detection system including a battery-powered vehicle-detection device with induction sensor (BVDI), according to one or more embodiments.
Figure 3 illustrates a top view of an example printed circuit board (PCB) included in the BVDI of Figure 2, according to one or more embodiments.
Figure 4 is a conceptual diagram depicting connectivity of printed circuit board components included in the BVDI of Figure 2, according to one or more embodiments.
Figure 5 illustrates an example of a detection device 500 comprising a set of batteries embedded within cut-out areas of the printed circuit board included in the vehicle-detection device of Figure 2, according to one or more embodiments.
Figure 6 sets forth a flow chart of method steps for controlling one or more sensors for the vehicle-detective device of Figure 2 to detect an object, according to one or more embodiments.

### DETAILED DESCRIPTION:

Reference will now be made in detail to several embodiments. While the subject matter will be described in conjunction with the alternative embodiments, it will be understood that they are not intended to limit the claimed subject matter to these embodiments. On the contrary, the claimed subject matter is intended to cover alternative, modifications, and equivalents, which may be included within the spirit and scope of the claimed subject matter as defined by the appended claims.

Furthermore, in the following detailed description, numerous specific details are set forth in order to provide a thorough understanding of the claimed subject matter. However, it will be recognized by one skilled in the art that embodiments may be practiced without these specific details or with equivalents thereof. In other instances, well-known methods, procedures, components, and circuits have not been described in detail so as not to unnecessarily obscure aspects and features of the subject matter.

It should be borne in mind, however, that all of these and similar terms are to be associated with the appropriate physical quantities and are merely convenient labels applied to these quantities. Unless specifically stated otherwise as apparent from the following discussions, it is appreciated that throughout, discussions utilizing terms such as "accessing," "displaying," "writing," "including," "storing," "transmitting," "traversing," "determining," "identifying," "observing," "adjusting," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

### OVERVIEW

An inductive sensor uses electromagnetic induction to detect or measure objects. An inductor develops a magnetic field when a current flows through the inductor. When the induced magnetic field is present, an external conductive object that is placed in proximity to the inductor changes the magnetic field created by the inductor, and, hence, changes the measured inductance (i.e., the ratio between the magnetic field flux and the current). Inductive sensors work well within harsh environments, as these types of sensors are robust to environmental factors when compared to other types of sensors and can deliver stable signals even in hostile environments. Many entities use various types of inductive sensors to monitor traffic by embedding large inductance loops (or coils) of wire in the road surface. In such instances, the inductance loop can be connected to an alternating-current (AC) power supply to create the inductive sensor. When a vehicle approaches the inductance loop, the inductance of the loop changes due to the presence of conductive vehicle components in the induced magnetic field. A sensor circuit coupled to the inductance loop measures or detects that change of inductance and transmits sensor data that indicates the presence of a vehicle.

One of the drawbacks of conventional object detection sensors is that the sensing range of a given inductive sensor is dependent on the coil diameter of the inductance loop. As a result, some coil diameters used in inductive sensors can be larger than the size of a typical battery-powered vehicle-detection device. Further, the detection sensitivity of inductive sensors can decline rapidly when detecting objects that are at distances beyond the diameter of the inductive coil. In addition, some battery-powered vehicle-detection devices have batteries that provide limited power, as a direct current (DC). By contrast, various inductive sensors operate with a high-power input and an alternating current (AC).

In view of the foregoing, various embodiments of the present disclosure include devices having induction loops and/or inductive sensors (preferably, inductive sensors comprising a loop cool having at least one turn) embedded within a battery-powered vehicle-detection device. The battery-powered vehicle-detection device with an inductive sensor (BVDI) employs an inductive coil located around and/or close to an outer perimeter of a circular printed circuit board (PCB). The detection range of the BVDI is proportional to the diameter of a loop. In various embodiments, the BVDI may include a maximized coil diameter that is within the physical constraints imposed by the overall physical size of the BVDI device. In various embodiments, the BVDI controls power that the battery provides to the inductive sensor. Controlling the operation of the inductive sensors in this manner conserves power by operating the inductive sensor for short periods of time, while using separate low-power sensors over longer periods. In some embodiments, the BVDI may comprise an analog-to-digital (A/D) converter (preferably, a wide-range 28-bit analog-to-digital (A/D) converter) and an oscillator that generates an alternating current from the direct current provided by the battery. Additionally or alternatively, the A/D converter chip can obtain an accurate inductance measurement from the inductive loop when detecting objects, particularly, when detecting objects at distances beyond two inductive loop diameters. For example, a BVDI that includes an inductive coil having a 4" diameter and a wide-range A/D converter chip can generate an inductance measurement that detects a truck with a clearance of 15" or at a position that is 15" away from the inductive coil, in one or more embodiments.

### BATTERY-POWERED VEHICLE-DETECTION DEVICE WITH INDUCTIVE SENSOR

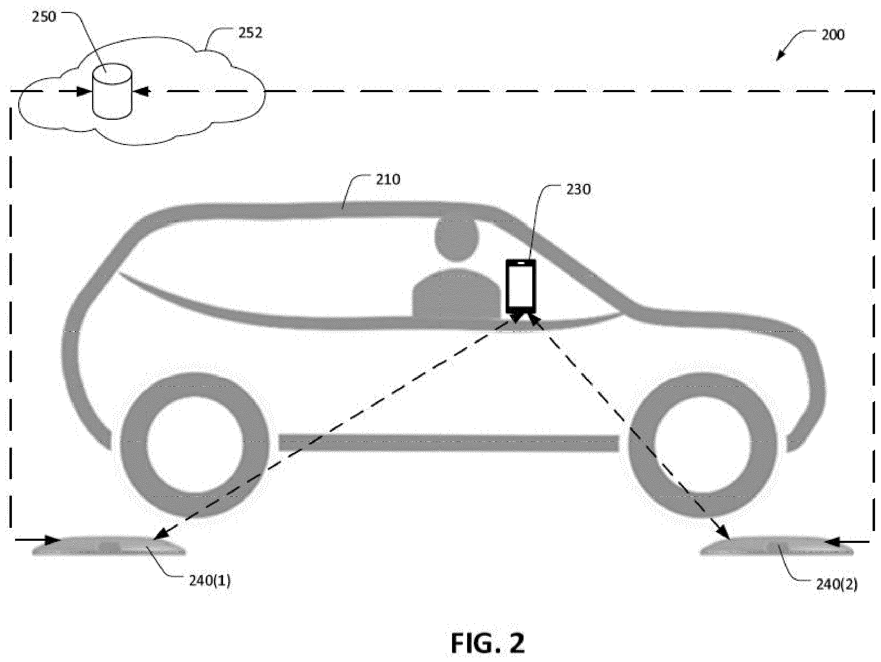

FIG. 2 illustrates an example object detection system 200 including a battery-powered vehicle-detection device with induction sensor (BVDI) 240, according to one or more embodiments. As shown, and without limitation, the object detection system 200 comprises a vehicle 210 (object to be detected, not specifically a part of the system), a first remote device/subsystem configured as a communication device 230, one or more detection devices BVDIs 240 connected to a network 252, and a second remote device/subsystem configured as a remote management server 250 connected to the network 252.

In operation, the one or more detection devices BVDIs 240 use one or more induction sensors (e.g. a first and a second inductive sensor) to sense the presence of the vehicle 210. The BVDIs are configured to generate sensing signals that indicate the presence of the vehicle 210 and to transmit (preferably, wirelessly transmit) the sensing signals to the one or more remote devices/subsystems (e.g. to the communication device 230 and/or the remote management server 250).

The vehicle 210 can be various types of motor vehicles, such as cars, sports-utility vehicles, vans, trucks, buses, etc. In some embodiments, the vehicle 210 may have a clearance height that is larger than a diameter of the inductive coil included in the inductive sensor. In various embodiments, the vehicle 210 may contain a communication device 230, such as a smart-phone or an embedded computer. However, it is noted that the communication device 230 may be an element external to the vehicle 210 (e.g. a smart-phone or electronic device that may be outside the vehicle 210).

In some embodiments, the one or more detection devices BVDIs 240 are configured to detect the vehicle 210 and to respond to the detection by transmitting the sensing signal to a remote device, such as the communication device 230. In such instances, the sensing signal indicates that the one or more BVDIs 240 detected the vehicle 210. In some embodiments, the one or more BVDIs 240 may be configured to generate a detection signal based on the sensing signal. For example, the BVDIs 240 may compare the sensing signal to a threshold and generate a detection signal (preferably, a binary detection signal) that indicates the presence or absence of an object (e.g. a vehicle). In such instances, the BVDIs 240 may be configured to transmit the detection signal in conjunction with or in lieu of transmitting the sensing signal. Additionally or alternatively, other possible systems may employ or integrate with the BVDI devices 240. For example, various object detecting systems, such as vehicle counting systems, automatic gate control systems, security systems, transportation safety systems (e.g., locomotive safety systems), can include one or more BVDI devices 240 to detect objects within a specific area.

Additionally or alternatively, in various embodiments, the BVDIs can wirelessly transmit the sensing signal using one or more communication protocols (e.g., Bluetooth, WiFi, LTE, etc.). In various embodiments, the BVDI devices 240 can have long-range wireless communication capabilities. For example, the BVDI can include one or more wireless/radio transmitters that communicate with the remote management server 250.

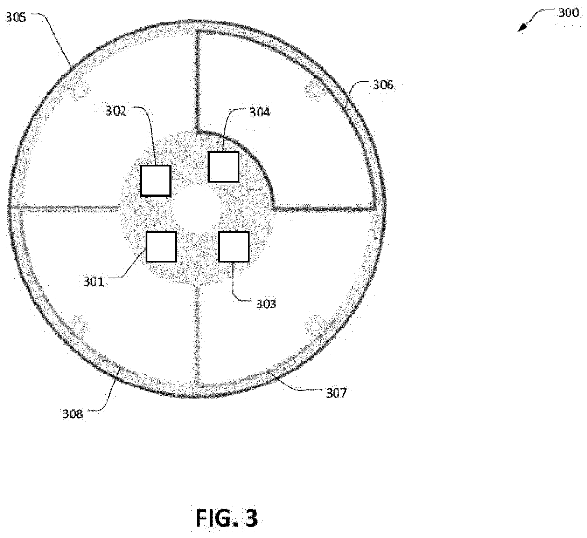

FIG. 3 illustrates a top view of an example printed circuit board (PCB) 300 included in the detection device BVDI 240 of FIG. 2, according to one or more embodiments. As shown, and without limitation, the PCB 300 includes a microprocessor 301, a first passive sensor configured as a magnetometer 302, a second passive sensor configured as an ambient light sensor 303, an inductance management and digital converter unit (IMDCU) 304, a first inductance coil 305 (i.e. a first inductance sensor), a second inductance coil 306 (i.e. a second inductance sensor), and radio-frequency (RF) antennas 307-308 for providing wireless communication.

The microprocessor 301 is configured to provide overall control of the BVDI 240. In various embodiments, the microprocessor 301 may orchestrate various sensing tasks and/or control RF communications. For example, the microprocessor 301 may calibrate each of the sensors 302, 303, 305, 306, may determine whether the additional signals generated by the passive sensors 302 and 303 and/or the sensing signals generated by the inductive sensors 305 and 306 indicate the presence of an object (e.g., a vehicle proximate to the BVDI 240), and/or can generate a detection signal that indicates the determination regarding the presence of the object. In another example, the microprocessor 301 may periodically enable one or more of the inductance coils 305-306 to perform periodic high-power object detection, preferably by the detection device further comprising a timer configured to provide a timing signal at the end of a time period.

In various embodiments, the BVDI 240 may comprise one or more low-power sensors (i.e. passive sensors) and one or more high-power inductive sensors. For example, as shown, the PCB 300 includes two passive (i.e. low-power) sensors (e.g., the magnetometer 302 and the ambient light sensor 303) and two inductive sensors (i.e. high-power sensors) 305 and 306. The magnetometer 302 is configured to detect the presence of ferrous metals. For example, vehicles that include ferrous materials (e.g., the vehicle 210) can be detected by the magnetometer 302. In such instances, the magnetometer 302 can act as a passive (low-power) sensor that the detection device BVDI 240 can use for initial detection of vehicles (i.e. before activating the inductive sensors). Similarly, the ambient light sensor 303 detects variations in an ambient light level. In various embodiments, the ambient light sensor 303 can be a passive, low-power sensor that can be used for initial detection of vehicles in concert with or in lieu of the magnetometer 302. In various embodiments, the passive sensor data can be sampled with a given frequency (e.g., ~1 Hz) to detect changes indicating an increased probability of vehicle presence. In such instances, when the estimated probability function is above a certain threshold, the microprocessor may be configured to turn on the one ore more inductive sensors.

The inductance management and digital converter unit (IMDCU) 304, which is preferably configured as the combination of an oscillator and a A/D converter, is configured to control the power input to the one or more inductive sensors. In various embodiments, the IMDCU 304 may convert a DC battery current to an AC current (e.g. by means of the oscillator) for the inductive coils 305-306. In some embodiments, the IMDCU 304 may be configured to measure one or more inductive currents produced by the inductance coils 305-306. In some embodiments, the microprocessor 301 may employ the inductance measurement as the sensing signal. Alternatively, in some embodiments, the microprocessor 301 may use the inductance measurements of the inductance sensors as an input when generating the sensing signal and/or the detection signal. In one example, the microprocessor 301 may compare the inductance measurements to one or more thresholds. The microprocessor 301 may then generate a sensing signal based on a determination of whether either or both of the inductance measurements (of any of the inductance sensors) exceeded an associated threshold. In another example, the microprocessor 301 may generate the detection signal as a binary signal based on a sensing signal that includes the inductance measurement of any of the inductance sensors.

The inductance coils 305-306 are configured to induce two magnetic fields. In various embodiments, the IMDCU 304 (i.e. the oscillator and the A/D converter) and/or the microprocessor 301 may be configured to generate inductance measurements of the inductance sensors that indicate/represent changes in the induced magnetic fields generated by the inductance coils 305-306. In various embodiments, the inductance coils 305-306 may have different configurations. For example, the inductance coil 305 may have a different diameter and/or a different number of turns than the inductance coil 306. In the example of Figure 3, the inductance coil 305 has multiple turns (e.g., 10 turns) around the outer rim of the PCB 300. Other configurations are possible; for example, the inductance coil 305 could have one turn. Following the example of Figure 3, the second inductance coil 306 may have a smaller effective diameter relative to the inductance coil 305. In such instances, the inductance coil 306 may have a comparatively more-limited sensitivity (i.e. a more reduced sensing range) than the inductance coil 305 to detect vehicles on top. In such instances, the inductance coil 306 may be configured to operate mainly as a reference for calibration purposes and/or help offset environment changes to inductance (e.g., temperature, humidity, etc.). In the example of Figure 3, the inductance coil 305 may have a larger effective diameter. In such instances, the inductance coil 305 may be configured to detect vehicles at a range above 5 inches. In various embodiments, second inductance coil 306 could have different numbers of turns. In the example of Figure 3, the inductance coil 306 is located around a quadrant of the PCB 300.

The wireless or RF antennas 307-308 can be transceivers for various frequencies to communicate with other devices (i.e. remote devices) using one or more communication protocols. For example, the wireless or RF antenna 307 may be configured as a Bluetooth antenna for short to medium distance communication, while the wireless or RF antenna 308 may be configured to serve as an antenna for long-distance communication (e.g., communications at sub-GHz wavelengths).

Different embodiments of the PCB 300 and/or the BVDI 240 could have different configurations, such as one or more inductive sensors (e.g. a single inductive sensor, or at least a first and a second inductive sensors), one or more passive low-power sensors, and different types of low-power sensors. Some embodiments of the BVDI 240 could use many combinations of sensors with or without an inductive sensor. Sensor examples include radar and passive light detection sensors.

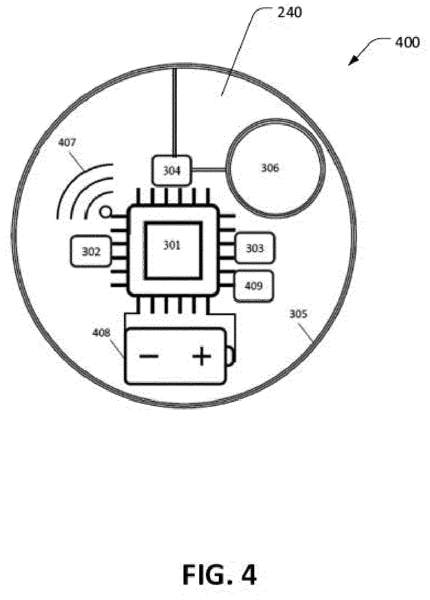

FIG. 4 is a conceptual diagram 400 depicting connectivity of example printed circuit board components included in the detection device BVDI 240 of Figure 2, according to one or more embodiments. As shown, and without limitation, the BVDI 240 comprises a microprocessor 301, a first passive sensor configured as a magnetometer 302, a second passive sensor configured as an ambient light sensor 303, a IMDCU 304, a first inductive sensor with a first inductance coil 305, a second inductive sensor with a second inductance coil 306, a wireless/radio transmission system 407, a battery 408, and memory 409.

In various embodiments, the microprocessor 301 may be coupled to the memory 409, the magnetometer 302, the ambient light sensor 303, the IMDCU 304, the wireless/radio transmission system 407, and/or the battery 408. In some embodiments, the memory 409 and microprocessor 301 can be integrated within the same silicon device or within the same semiconductor package.

The microprocessor 301 is configured to read from and/or write to the memory 409. The memory 409 holds one or more executable instructions that the microprocessor 301 is configured to execute to enable various functionalities of the detection device BVDI 240. In some embodiments, the memory 409 may be configured to store status information; in such instances, the status information may be updated by the microprocessor 301.

The microprocessor 301 is configured to control the magnetometer 302, and/or the ambient light sensor 303 (i.e. the passive sensors) by initiating their operation and by reading initial vehicle-detection measurements/signals configured as additional signals (e.g., electrical and/or optical sensor data provided by the passive sensors) acquired by the magnetometer 302 and/or the ambient light sensor 303. In various embodiments, the microprocessor 301 may be configured to control the IMDCU 304 by enabling the one or more inductive sensors at specific times (e.g. by using a timer as previously described) and by causing the IMDCU 304 to take inductance measurements from the inductive sensors. Additionally or alternatively, in some embodiments, the microprocessor 301 may be configured to control the wireless/radio transmission system 407 to send and/or receive messages over various communications channels (e.g., via Bluetooth and/or long-distance radio communications channels). The battery 408 supplies power (e.g., a direct current at a specific voltage) to the PCB and all components of the detecting device.

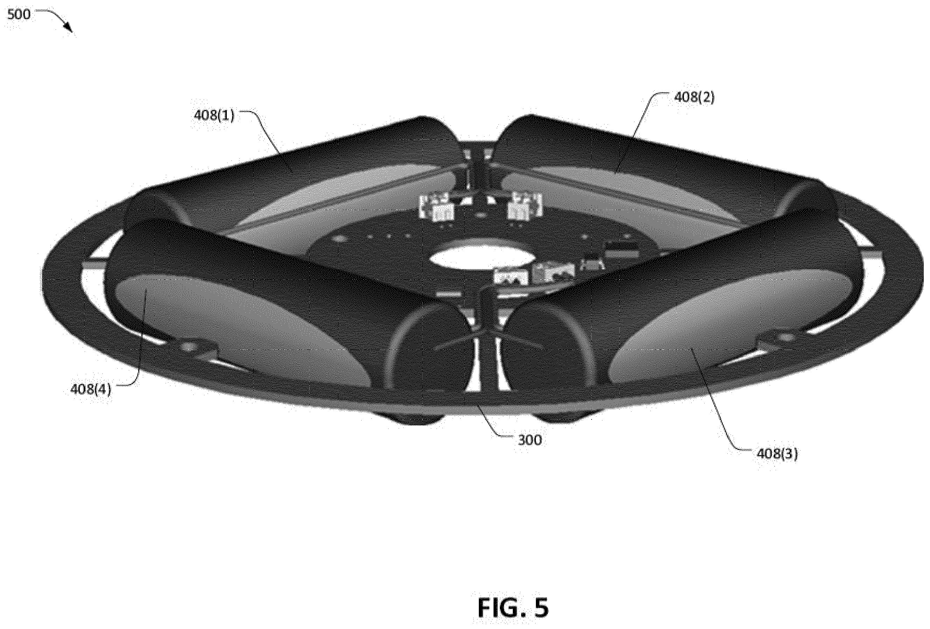

FIG. 5 illustrates a device 500 according to the invention including a set of batteries 408 embedded within cut-out areas of the printed circuit board 300 included in the detection device BVDI 240 of Figure 2, according to one or more embodiments. As shown, the device 500 includes the PCB 300 and the set of batteries 408.

As shown, in some embodiments, the set of batteries 408 may be disposed on a common plane with the PCB 300. In such instances, positioning the set of batteries 408 on the same plane of the PCB 300 provides the advantageous effect of minimizing the height of the BVDI 240. In some embodiments, the set of batteries 408 may be disposed within the outer perimeter of the PCB 300. In such instances, disposing the set of batteries 408 inside the PCB 300 provides the advantageous effect of maximizing the diameter of the first inductance coil 305 and/or optimizing the diameter of the overall device 500.

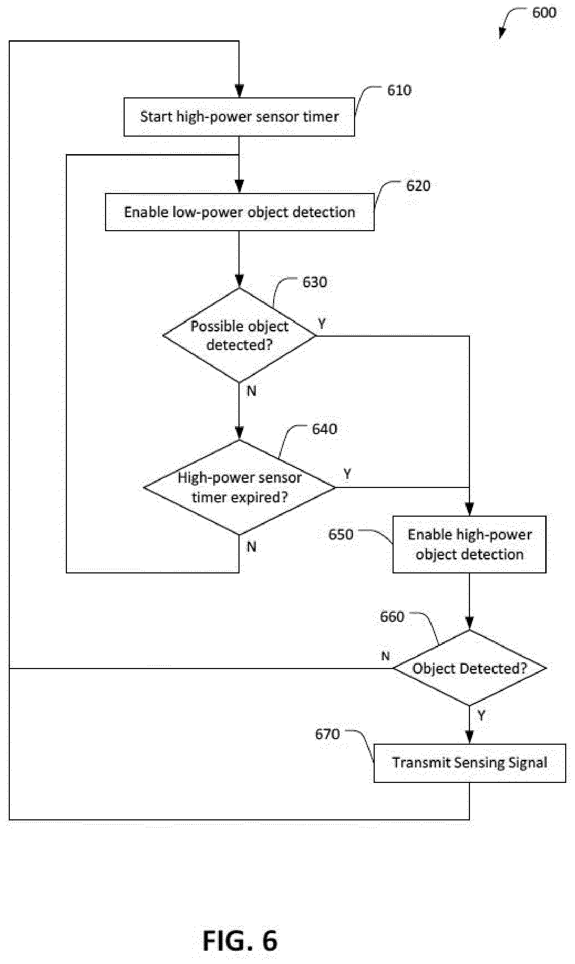

FIG. 6 sets forth a flow of method steps for controlling high-power sensors, according to one or more embodiments. Although the method steps are described with respect to Figures 1-5, persons skilled in the art will understand that any system configured to perform the method steps, in any order, falls within the scope of the various embodiments.

As shown, the method 600 beings at step 610, where the detection device BVDI 240 starts a high-power sensor timer. At step 620, the BVDI 240 enables low-power object detection. For example, the BVDI 240 may enable a low-power detection mode where one or more passive, low-power sensors (e.g., the magnetometer 302 and/or the ambient light sensor 303) may acquire sensor data to generate the one or more additional signals. In various embodiments, the passive, low-power sensors may operate persistently/continuously; alternatively, the passive, low-power sensors, may be configured to operate in response to a timing signal provided by a timer, wherein said timing signal may be configured as a first/passive/low-power timing signal indicating the end of a first time period, wherein said first time period may have a shorter duration than the time period used for activating the inductance sensors (e.g. a second/inductive/high-power time period at the end of which a second timing signal is generated for activating one or more of the inductive sensors).

At step 630, the detection device BVDI 240 may be configured to determine whether an object has been detected. In various embodiments, the microprocessor 301 may be configured to determine whether any of the passive, low-power sensors detected a possible object (e.g., the vehicle 210). For example, the microprocessor 301 may acquire vehicle-detection measurements (e.g., electrical and/or optical sensor data that are used/processed to generate the additional signals) acquired by the magnetometer 302 and/or the ambient light sensor 303 and compare the acquired vehicle-detection measurements (or the associated additional signals) to one or more pre-defined thresholds. When the BVDI 240 determines that one or more of the passive, low-power sensors have detected a possible object, the microprocessor 301 determines a high-probability that an object is present and proceeds to step 650. Otherwise, when the BVDI 240 determines a low probability that the one or more passive, low-power sensors detected a possible object, the BVDI 240 continues to step 640.

At step 640, the BVDI 240 determines whether the timer has expired. In various embodiments, the BVDI 240 can periodically perform high-power object detection. In such instances, the microprocessor 301 can cause the IMDCU 304 (e.g. by means of the oscillator) to provide AC power to the high-power inductance sensors when the timer expires (i.e. when the high-power time period expires, thereby generating a respective high-power timing signal). When the BVDI 240 determines that the timer has expired, the BVDI 240 proceeds to step 650. Otherwise, when the BVDI 240 determines that the timer has not expired, the BVDI 240 returns to step 610.

At step 650, the BVDI 240 enables the high-power object detection by means of the one or more inductive sensors. In various embodiments, the microprocessor 301 may be configured to enable the high-power object detection by causing the IMDCU 304 to provide AC power to the first inductance coil 305 and/or the second inductance coil 306. In such instances, the inductance sensor can use the magnetic fields induced by the first inductance coil 305 and/or the second inductance coil 306 to take object-detection measurements. In some embodiments, the BVDI 240 can enable the high-power inductive sensors separately, one after another. Thus, the method diagram of figure 6 may be executed independently for controlling at least one of the inductive sensors, or in parallel for controlling at least two of inductance sensors.

At step 660, the BVDI 240 determines whether an object has been detected. In various embodiments, the microprocessor 301 may be configured to cause the IMDCU 304 to acquire measurements regarding the induced magnetic fields from the first induction coil 305 and/or the second induction coil 306 (i.e. the microprocessor 301 is configured to generate/provide the information that is used for generating the respective sensing signals). The microprocessor 301 may be configured to then compare the measurements with a pre-defined threshold. In some embodiments, the microprocessor 301 may be configured to generate a sensing signal and/or a determination signal that indicates the result of the comparison When the BVDI 240 determines that an object (e.g., the vehicle 210) has been detected, the BVDI 240 proceeds to step 670.

Otherwise, the BVDI 240 determines that an object has not been detected and returns to step 610.

At step 670, the BVDI 240 transmits a sensing signal. In various embodiments, the microprocessor 301 may be configured to transmit a sensing signal to one or more remote devices via the wireless/radio transmission system 407. For example, the BVDI 240 may be configured to transmit the sensing signal over a Bluetooth communication channel to the communication device 230, where the sensing signal indicates that the BVDI 240 detected the presence of the vehicle 210. In another example, the BVDI 240 may be configured transmit the sensing signal over a long-distance radio communication channel to the remote management server 250. In some embodiments, the BVDI 240 may be configured to generate a determination signal based on the sensing signal. In such instances, the BVDI 240 may be configured to transmit the determination signal in conjunction with or in lieu of the sensing signal. Upon transmitting the sensing signal, the BVDI 240 can return to step 610.

In some embodiments, The BVDI 240 can be configured so that each high-power inductive sensor is associated with a different time period that has a different duration. In such instances, the BVDI 240 may be configured to execute the method 600 on each of the respective high-power inductive sensors in parallel. For example, the BVDI 240 can execute step 640 to enable high-power object detection using the specific high-power inductive sensor that is associated with the specific time period that expired.

In various embodiments, the BVDI 240 can be configured to apply different power modes to detect the presence and/or the absence of the vehicle 210. For example, the vehicle 210 can be parked close to the BVDI 240 for many hours. In such instances, measurements from sensor data acquired by the magnetometer 302 and/or the ambient light sensor 303 can confirm that the vehicle 210 remains present. Accordingly, the BVDI 240 can refrain from powering the inductive sensor and reading inductance measurements.

In some embodiments, in order to keep track of a baseline level (e.g., when no object present) of the various magnetic fields and/or other measurements, and/or to adjust for gradual changes (e.g., changes due to temperature drifts, precipitation, etc.), the BVDI 240 may be configured to power the inductive sensors for brief periods to perform measurements. For example, the BVDI 240 can power the inductive sensors for 25 milliseconds approximately every minute. In such instances, the BVDI 240 can control the inductive sensors using a form of duty cycle modulation. The inductive sensors may be susceptible to common thermal drifts or other near-range changes (e.g., less than one coil diameter). In some embodiments, the high-power inductive sensor timer duration can vary, for example, based on onboard temperature sensor measurements.

In some embodiments, the inductive sensors may be configured to provide a proportionally longer sensing range (e.g. by configuring the inductive sensors to have different coil sizes, following an increasing progression/pattern) and can be more responsive to environment changes beyond one diameter, compared to the characteristics of a smaller inductance coil. In various embodiments, the microprocessor 301 may be configured to apply various statistical regression algorithms to time-series data generated by the one or more inductive sensors in order to detect or resolve a sensing signal induced by objects that are located beyond one diameter of a given inductance coil.

The present disclosure further refers to the following examples:

### EXAMPLES

1. A device comprising a battery that configured to generate a first power, and an inductive sensor configured to generate a magnetic field based on the first power, and to generate, based on a change to the magnetic field, a sensing signal indicating a presence of an object, where delivery of the first power to the inductive sensor is based on one or more additional signals.
2. The device of example 1, further comprising a microprocessor configured to generate a determination signal based on the sensing signal and causes the determination to be wirelessly transmitted to at least one remote device.
3. The device of example 1 or 2, further comprising a printed circuit board, where the microprocessor is mounted in the printed circuit board, and the batteries are disposed within one or more cut-out areas included in the printed circuit board.
4. The device of any of examples 1-3, further comprising at least one passive sensor configured to generate the one or more additional signals, and a microprocessor configured to receive the one or more additional signals from the at least one passive sensor, and to control, based on the one or more additional signals, the delivery of the first power to the inductive sensor.
5. The device of any of examples 1-4, where the least one passive sensor comprises at least one of a light sensor configured to measure ambient light, a magnetometer configured to measure a quantity of ferrous materials, or a temperature sensor.
6. The device of any of examples 1-5, further comprising a microprocessor configured to control the delivery of the first power to the inductive sensor by determining that the one or more additional signals indicate a likelihood that a vehicle is proximate to at least one passive sensor, where the at least one passive sensor is configured to generate the one or more additional signals and, in response to said determination, to cause the battery to provide the first power to the inductive sensor.
7. The device of any of examples 1-6, where the inductive sensor comprises a loop coil that includes at least one turn.
8. The device of any of examples 1-7, where the inductive sensor further comprises an analog-to-digital (A/D) converter and an oscillator configured to convert the first power into a first alternating current (AC) power, to provide the first AC power to the loop coil, and to receive the sensing signal from the loop coil and to convert it to digital form.
9. The device of any of examples 1-8, further comprising an enclosure that includes the loop coil, where the loop coil: (i) is located proximate to an outer perimeter of the enclosure, and/or (ii) has an effective diameter of at least 4 cm.
10. The device of any of examples 1-9, further comprising a timer configured to generate a timing signal indicating when a first period ends , and a microprocessor configure to receive the timing signal, and to cause the battery to provide the first power to the inductive sensor based on (i) the timing signal, and/or (ii) the one or more additional signals.
11. The device of any of examples 1-10 further comprising a second inductive sensor, where the inductive sensor includes a first loop coil having a first loop size and one or more turns, and the second inductive sensor includes a second loop coil having a second loop size and one or more turns.
12. The device of any of examples 1-11, where a first sensing range of the first loop coil to detect the presence of the object is based on the first loop size, and a second sensing range of the second loop coil to detect the presence of the object is based on the second loop size.
13. The device of any of examples 1-12, where the first sensing range is at least 12 cm.
14. A method for detecting an object (e.g. a vehicle) comprises receiving, by an inductive sensor, a first power generated by a battery, where the first power is provided to the inductive sensor based on one or more additional signals, generating, by the inductive sensor and based on the first power, a magnetic field, generating, based on a change to the magnetic field, a sensing signal indicating a presence of an object.
15. The method of example 14, further comprising receiving, by a microprocessor, the one or more additional signals that are provided by at least one passive sensor, and providing, based on the one or more additional signals, the first power to the inductive sensor.
16. The method of examples 14 or 15, further comprising determining, based on the one or more additional signals, a probability that the object is present, upon determining the probability, providing the first power to the inductive sensor, where the inductive sensor provides the sensing signal.
17. The method of any of examples 14-16, further comprising receiving a timing signal indicating when a first period ends, and causes the battery to provide the first power to the inductive sensor based on (i) the timing signal, or (ii) the one or more additional signals.
18. The method of any of examples 14-17, further comprising converting the first power into a first alternating current (AC) power, providing the first AC power to a loop coil that generates the magnetic field, and receiving the sensing signal from loop coil.
19. The method of any of examples 14-18, further comprising generating a determination signal based on the sensing signal, and preferably wirelessly transmitting the determination signal to at least one remote device.
20. The method of any of examples 14-19, where the remote device comprises (or is configured as) at least one of a portable device, a vehicle counting system, an automatic gate control system, or a remote server.

Any and all combinations of any of the claim elements recited in any of the claims and/or any elements described in this application, in any fashion, fall within the contemplated scope of the present invention and protection.

All examples and conditional language recited herein are intended for pedagogical purposes to aid the reader in understanding the principles of the present disclosure and the concepts contributed by the inventor to furthering the art and are to be construed as being without limitation to such specifically recited examples and conditions. Moreover, all statements herein reciting principles, aspects, and embodiments of the present disclosure, as well as specific examples thereof, are intended to encompass both structural and functional equivalents thereof. Additionally, it is intended that such equivalents include both currently known equivalents as well as equivalents developed in the future, e.g., any elements developed that perform the same function, regardless of structure.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The foregoing descriptions of various specific embodiments in accordance with the present disclosure have been presented for purposes of illustration and description. They are not intended to be exhaustive or to limit the present disclosure to the precise forms disclosed, and many modifications and variations are possible in light of the above teaching. The present disclosure is to be construed according to the claims that follow and their equivalents.

## Claims

1. A detection device (240(1), 240(2), 500) for detecting a presence of an object (210), such as a vehicle (210), the device comprising:
one or more batteries (408(1), 408(2), 408(3), 408(4)) configured to generate a first power; and
at least a first inductive sensor (305, 306) configured to:
generate a magnetic field based on the first power, and
generate, based on a change to the magnetic field, a sensing signal indicating a presence of an object (210); and
wherein the detection device (240(1), 240(2), 500) further comprises:
at least one passive sensor (302, 303) configured to generate one or more additional signals based on an initial detection of a presence of an object (210); and/or
a timer configured to measure at least a first time period and to provide a timing signal indicating when the first time periods ends;
wherein the detection device (240(1), 240(2), 500) is configured to deliver the first power to the first inductive sensor (305, 306) based on the one or more additional signals and/or based on the timing signal; and
wherein preferably the first inductive sensor (305, 306) comprises a loop coil that includes at least one turn.

2. The detection device (240(1), 240(2), 500) of claim 1, further comprising a microprocessor (301) configured to:
generate a determination signal based on the sensing signal; and
cause the determination signal to be wirelessly transmitted to at least one remote device;
wherein preferably the detection device further comprises a printed circuit board (300),
wherein:
the microprocessor (301) is mounted in the printed circuit board (300); and
the one or more batteries (408(1), 408(2), 408(3), 408(4)) are disposed within one or more cut-out areas included in the printed circuit board (300).

3. The detection device (240(1), 240(2), 500) of claims 1 or 2, wherein the microprocessor is further configured to:
receive the one or more additional signals from the at least one passive sensor; and
control, based on the one or more additional signals, the delivery of the first power to the first inductive sensor; and
wherein preferably the at least one passive sensor comprises at least one of:
a light sensor (303) configured to measure ambient light, and/or
a magnetometer (302) configured to measure a quantity of ferrous materials, and/or
a temperature sensor.

4. The detection device (240(1), 240(2), 500) of any of the preceding claims, wherein the microprocessor (301) is further configured to control the delivery of the first power to the first inductive sensor (305, 306) by:
determining that the one or more additional signals indicate that an estimated probability that a vehicle (210) is proximate to at least one passive sensor (302, 303) is above a predetermined threshold; and
in response, to the determination, causing the one or more batteries (408(1), 408(2), 408(3), 408(4)) to provide the first power to the first inductive sensor (305, 306).

5. The detection device (240(1), 240(2), 500) of any of the preceding claims, further comprising an oscillator and analog-to-digital (A/D) converter configured to:
convert the first power into a first alternating current (AC) power using the oscillator;
provide the first AC power to the loop coil of the first inductive sensor (305, 306);
receive the sensing signal from the loop coil of the first inductive sensor (305, 306); and
convert the sensing signal into digital form.

6. The detection device (240(1), 240(2), 500) of any of the preceding claims, further comprising an enclosure that includes the loop coil of the first inductive sensor (305,306), wherein the loop coil is located proximate to an outer perimeter of the enclosure, and/or has an effective diameter of at least 4 cm.

7. The detection device of (240(1), 240(2), 500) of any of the preceding claims wherein the microprocessor (301) is further configured to:
receive the timing signal; and
cause the one or more batteries to provide a first power to the inductive sensor based on the timing signal, and/or the one or more additional signals.

8. The detection device of any of the preceding claims, further comprising a second inductive sensor, wherein:
the first inductive sensor (305, 306) includes a first loop coil having a first loop size and one or more turns; and
the second inductive sensor (305, 306) includes a second loop coil having a second loop size and one or more turns;.
wherein preferably:
a first sensing range of the first loop coil to detect the presence of the object is based on the first loop size, the first sensing range being more preferably at least 12 cm.; and
a second sensing range of the second loop coil to detect the presence of the object is based on the second loop size.

9. An object detection system comprising:
one or more detection devices (240(1), 240(2), 500) for detecting a presence of an object according to any of the preceding claims; and
at least one remote device (230, 250), preferably configured as one or more of: a communication device (230) and/or a remote management server (250), and/or a portable device and/or a vehicle counting system and/or an automatic gate control system;
wherein the one or more detection devices (240(1), 240(2), 500) are configured to transmit the sensing signal to the at least one remote device; and
wherein preferably the one or more detection devices (240(1), 240(2), 500) and the at least one remote device are connected to a network (252) comprising a remote management server (250) configured to monitor and/or control the operation of the object detection system.

10. A method for detecting an object (210), such as a vehicle (210), with a device or a system according to any of the preceding claims, the method comprising:
receiving, by the first inductive sensor (305, 306), a first power generated by the one or more batteries (408(1), 408(2), 408(3), 408(4)), wherein the first power is provided to the first inductive sensor (305, 306) based on the one or more additional signals generated by the at least one passive sensor (302, 303) and/or based on the timing signal provided by the timer;
generating, by the first inductive sensor (305, 306) and based on the first power, a magnetic field;
generating, based on a change to the magnetic field, a sensing signal indicating a presence of an object (210).

11. The method of claim 10, further comprising:
receiving, by the microprocessor (301), the one or more additional signals that are provided by at least one passive sensor (302, 303); and
providing, based on the one or more additional signals, the first power to the first inductive sensor (305, 306).

12. The method of claims 10 or 11, further comprising:
determining, based on the one or more additional signals, a probability that the object (210) is present;
upon determining the probability, providing the first power to the first inductive sensor (305, 306), wherein the first inductive sensor (305, 306) provides the sensing signal.

13. The method of any of claims 10 to 12, further comprising:
receiving a timing signal indicating when a first period ends; and
causing the one or more batteries (408(1), 408(2), 408(3), 408(4)) to provide the first power to the first inductive sensor (305, 306) based on the timing signal, and/or the one or more additional signals.

14. The method of any of claims 10 to 13, further comprising:
converting, by the oscillator, the first power into a first alternating current AC power;
providing the first alternating current AC power to a loop coil that generates the magnetic field;
receiving the sensing signal from loop coil; and
converting the sensing signal into digital form via the analog-to-digital converter.

15. The method of any of claims 10 to 14, further comprising:
generating a determination signal based on the sensing signal; and
wirelessly transmitting the determination signal to at least one remote device (230);
wherein preferably the remote device comprises at least one of a portable device, a vehicle counting system, an automatic gate control system, and/or a remote server.
